## Europäisches Patentamt

## European Patent Office

## Office européen des brevets

(19)

(11) Numéro de publication: **0 073 719**
**B1**

(12) FASCICULE DE BREVET EUROPEEN

(45) Date de publication du fascicule du brevet:
17.04.85

(51) Int. Cl.⁴: **H 04 Q 1/457**

(21) Numéro de dépôt: **82401586.1**

(22) Date de dépôt: **26.08.82**

(54) **Dispositif numérique de reconnaissance de fréquences.**

(30) Priorité: **27.08.81 FR 8116351**

(43) Date de publication de la demande:
**09.03.83 Bulletin 83/10**

(45) Mention de la délivrance du brevet:
**17.04.85 Bulletin 85/16**

(84) Etats contractants désignés:
**BE CH DE FR GB IT LI NL SE**

(56) Documents cités:
**FR - A - 2 299 769**
**FR - A - 2 424 669**
**FR - A - 2 455 405**

**1972, INTERNATIONAL ZURICH SEMINAR ON INTEGRATED SYSTEMS FOR SPEECH, VIDEO AND DATA COMMUNICATIONS, 15-17 mars 1972, pages A3(1) - A3(13), Zürich, CH.**
**INTERNATIONAL CONFERENCE ON COMMUNICATIONS, 10-14 juin 1979, pages 37.5.1 à 37.5.6, Boston, USA**

(73) Titulaire: **SOCIETE ANONYME DE TELECOMMUNICATIONS, 40 avenue de New York, F-75116 Paris (FR)**

(72) Inventeur: **Kerdoncuff, Guy Pierre, Alleé des Hortensias, F-22700 Perros-Guirec Côtes du Nord (FR)**
Inventeur: **Provendier, Jacques Henri, La Hulotte, Tal an Ilis, F-22300 Lannion Côtes du Nord (FR)**

(74) Mandataire: **Bloch, Robert et al, 39 avenue de Friedland, F-75008 Paris (FR)**

BUNDESDRUCKEREI BERLIN

## Description

La présente invention concerne un récepteur numérique de signaux multifréquences à modulation par impulsions codées et plus particulièrement un dispositif de reconnaissance proprement dit de chacune des fréquences à détecter.

De tels signaux multifréquences sont en particulier utilisés pour la signalisation entre centres téléphoniques automatiques ou entre abonnés et centres téléphoniques. Les codes de signalisation appelés code $R_2$ ou code MF SOCOTEL dans le premier cas et code »clavier« dans le second, sont formés le plus souvent à partir de deux fréquences appartenant à un groupe de N fréquences, une seule fréquences étant présente pour la fréquence de contrôle du code MF SOCOTEL. Les récepteurs numériques multifréquences ont pour but de détecter la présence de ces fréquences dans un signal, ces fréquences étant parfois appelées fréquences de référence.

On connaît déjà un dispositif numérique récepteur de signaux multifréquences, par le brevet français 2 299 769 de la demanderesse. Il consiste essentiellement à effectuer l'intercorrélation du signal entrant avec des signaux représentatifs de fréquences de référence, lesdits signaux se présentant sous la forme de sinus et cosinus et étant stockés sous forme d'échantillons dans des mémoires mortes, comprimés suivant une loi logarithmique. Un détecteur de seuil compare en sortie la grandeur du résultat de calcul déterminant la détection d'une fréquence.

On sait aussi, par le brevet français 2 455 405 et l'article de PELLANDINI dans »1972, International Zurich Seminar on Integrated Systems for Speech, Video and Data Communications«, former des valeurs caractéristiques pour toutes les fréquences du code qui peuvent être présentes à l'entrée d'un récepteur numérique de signaux multifréquences et faire une comparaison entre les valeurs caractéristiques pour déduire si une fréquence particulière est effectivement reconnue.

Toutefois, l'article de PELLANDINI n'enseigne que la détection par filtrage de fréquences et la nécessité d'un intervalle de sureté autour de chaque fréquence nominale. Quant au brevet français 2 455 405, il enseigne la détection de fréquences seulement par filtrage.

La présente invention met également en oeuvre les fonctions d'intercorrélation du signal entrant E avec des signaux représentatifs des fréquences de références mis sous la forme de sinus et cosinus mais préalablement pondérés par des fenêtres temporelles. L'utilisation de fenêtres temporelles a déjà été décrite dans de précédents documents. Ainsi l'article IEEE Trans. on com. de décembre 1973 de MM. KOVAL et GARA décrit leur application au filtrage temporel de signaux au moyen de fenêtres temporelles qui pondèrent les échantillons du signal numérique $E_n$ entrant, en fonction de leur rang, afin d'atténuer l'effet des fréquences voisines.

Une troncature temporelle entraîne une distorsion dans l'analyse harmonique du signal. L'article de F. J. HARRIS paru dans Proceedings of the IEEE vol 66 n° 1 janvier 78 décrit l'effet des fenêtres sur la répartition spectrale par transformée de Fourier d'un signal.

Dans les récepteurs numériques multifréquences, les troncatures ont pour fonction d'éliminer l'influence des fréquences gênantes pour l'algorithme de décision. Pour cela les fenêtres choisies doivent présenter des lobes latéraux faibles afin de réduire l'effet de signaux apparatenant à d'autres bandes de fréquences du spectre.

Il était également d'usage de choisir des fenêtres temporelles à lobe central étroit; en particulier si $f_i$ et $f_j$ sont deux fréquences de référence pour le code choisi, et voisines, on convenait d'adopter une fenêtre de largeur telle que l'écart e entre le centre du lobe central et l'un de ses bords, d'atténuation infinie, soit inférieur à $\Delta f_{ij}$, l'écart entre les deux fréquences nominales $f_i$, $f_j$. Une telle caractéristique a été décrite par exemple dans le brevet français 2 424 669, page 7, lignes 15—25. La figure 1 représente de critère de l'art antérieur de discernabilité de deux fréquences $f_i$ et $f_j$ ($e < \Delta f_{ij}$).

L'invention se propose de choisir des fenêtres temporelles, ne présentant pas autour d'une fréquence $f_i$ une atténuation infinie du lobe central au niveau des fréquences $f_{i\pm1}$ immédiatement adjacentes, mais, au contraire, une atténuation supérieure ou égale à une valeur K prédéterminée, toutefois infinie au niveau des fréquences $f_{i\pm2}$ suivantes.

Un tel choix confère aux fenêtres temporelles de l'invention une nouvelle fonction de reconnaissance d'une fréquence $f_i$ en établissant des valeurs V (f) pour des fréquences adjacentes $f_{i+1}$ et $f_{i-1}$, les valeurs V ($f_i$), V ($f_{i+1}$) et V ($f_{i-1}$) conservant des relations prédéterminées entre elles.

A cet effet, la présente invention concerne un dispositif de reconnaissance de fréquences pour récepteur numérique de signaux multifréquences, ledit récepteur comprenant des moyens de filtrage numérique, des moyens pour mémoriser des échantillons $L_n$ représentatifs de fréquences de référence, des moyens pour additionner en un signal $X_n$ le signal entrant $E_n$ et les échantillons de référence $L_n$, des moyens pour effectuer l'intercorrélation du signal entrant avec lesdits échantillons de référence $L_n$, caractérisé par le fait que les dits échantillons $L_n$ représentent le logarithme du produit d'une troncature temporelle $W_n$ par un signal de référence $R_n$, correspondant à une fenêtre temporelle dont la fonction, dans le domaine fréquentiel, possède un lobe central présentant une atténuation finie pour les fréquences $f_{i\pm1}$ adjacentes à chaque fréquence $f_i$ à reconnaître et une atténuation infinie pour les fréquences non adjacentes, qu'il comporte des moyens pour obtenir ledit signal $X_n$ sous forme d'exponentielle $K_n$, des moyens pour former des valeurs caractéristiques V ($f_i$) pour

chaque fréquence $f_i$ et pour former des valeurs $V(f_{i\pm1})$ caractéristique des V pour les fréquences adjacentes à la fréquence $f_i$ et des moyens pour comparer la valeur $V(f_i)$ avec les valeurs $V(f_{i+1})$ et $V(f_{i-1})$, un premier résultat de ladite comparaison permettant de déduire si ladite fréquence $f_i$ est effectivement reconnue.

L'invention permet de s'affranchir de fréquences parasites et de déterminer avec plus de sécurité la reconnaissance d'une fréquence.

D'autres avantages et caractéristiques apparaîtront à la lecture de la description suivante illustrée par des dessins annexés, sur lesquels:

La figure 1 est une représentation de l'évolution d'une valeur caractéristique V autour d'une fréquence $f_d$ à détecter, selon l'art antérieur.

La figure 2 illustre le problème posé selon l'invention.

Les figures 3 et 4 illustrent le critère de décision de l'invention de la reconnaissance d'une fréquence.

La figure 5 illustre la reconnaissance de la fréquence 770 Hz du code clavier.

La figure 6 représente une forme de réalisation d'une première partie des premiers moyens de l'invention.

La figure 7 représente une forme de réalisation de la seconde partie des premiers moyens de l'invention.

La figure 8 représente, en logique câblée, les seconds moyens du dispositif de reconnaissance de fréquences selon l'invention.

Il est bien connu que la multiplication dans le domaine temporel d'un signal entrant par une séquence limitée temporellement équivaut à une convolution dans le domaine fréquentiel.

Ainsi si $E(t)$ est le signal entrant et $W(t)$ est la fenêtre temporelle utilisée, le signal analysé s'ecrit dans le domaine temporel

$$S(t) = E(t) \cdot W(t)$$

ou encore, dans le domaine fréquentiel

$$S(\omega) = E(\omega) \equiv W(\omega)$$

et

$$S(\omega_0) = \int_{-\infty}^{+\infty} E(\omega) \cdot W(\omega - \omega_0)\, d\omega$$

où $\omega$ est lié à la fréquence f par la relation $\omega = 2\pi f$.

La fenêtre temporelle entraîne donc une distorsion dans l'analyse harmonique du signal. Ce fait a déjà été mentionné par exemple dans l'article précité de F. J. HARRIS.

La transformée de Fourier, de la fonction temporelle $W(t)$ bornée sur

$$\left(-\frac{t}{2}, \frac{t}{2}\right)$$

intervalle bien défini , est une fonction $W(f)$ présentant des maxima et des minima dans le domaine fréquentiel. Ainsi une fenêtre rectangulaire a pour transformée de Fourier la fonction

$$W(f) = \frac{\sin \pi ft}{ft},$$

présentant un lobe central important et des lobes secondaires alternativement négatifs et positifs lentement décroissants. Une structure analogue, lobe central entouré de lobes secondaires de faible amplitude, est également obtenue au moyen d'autres fenêtres temporelles par exemple de Hamming, Kaiser, Bessel, Dolph, Chebyschev, Temes . . .

La présente invention se propose de choisir l'une quelconque de ces fenêtres temporelles mais présentant une durée temporelle $\tau$ telle que le lobe central, dans le domaine fréquentiel, ne soit plus, comme dans l'art antérieur, nul ou à atténuation infinie au niveau des fréquences $f_{i\pm1}$ voisines de $f_i$, mais dont le lobe central présente une atténuation infinie pour les fréquences suivantes, lesdites fréquences $f_{i+1}$ et $f_{i-1}$ étant des fréquences de référence.

Une telle fenêtre permettant d'obtenir un lobe central présentant les caractéristiques souhaitées dépend de nombreux paramètres. Ainsi, la fréquence f à détecter incite à utiliser certains types de fenêtres tempoerelles. Comme il sera explicité ultérieurement pour détecter la fréquence 770 Hz du code clavier, on utilise une fenêtre de Hamming sur 127 échantillons d'expression:

$$W(n) = 0,54 - 0,46 \cos\left(\pi\frac{n-63}{63}\right).$$

Une telle fenêtre permet d'obtenir un lobe central présentant les caractéristiques souhaitées. D'autres fenêtres temporelles à la portée de l'homme de l'art conviendraient également.

Comme les fréquences f composantes présentes dans les signaux multifréquences sont définies avec une tolérance $\pm\varepsilon$, il en resulte, en réception, un domaine d'incertitude autour de $f_i$.

Si E est le signal numérique entrant, formé de M échantillons $E_n$, si W est la fonction de la troncature temporelle et T la période d'échantillonnage, les P couples de caleurs $A(f)$ et $B(f)$ ci-dessous sont représentatifs de la présence ou de l'absence de la fréquence f $(5 \leq P \leq 8)$:

$$A(f) = \sum_{0}^{M-1} E_n \sin(2\pi f n T) \cdot W_n$$

$$B(f) = \sum_{0}^{M-1} E_n \cos(2\pi f n T) \cdot W_n$$

Les valeurs $V(f)$ caractéristiques s'écrivent $V(f) = A^2(f) + B^2(f)$ et sont calculées pour les P fréquences f appartenant au code.

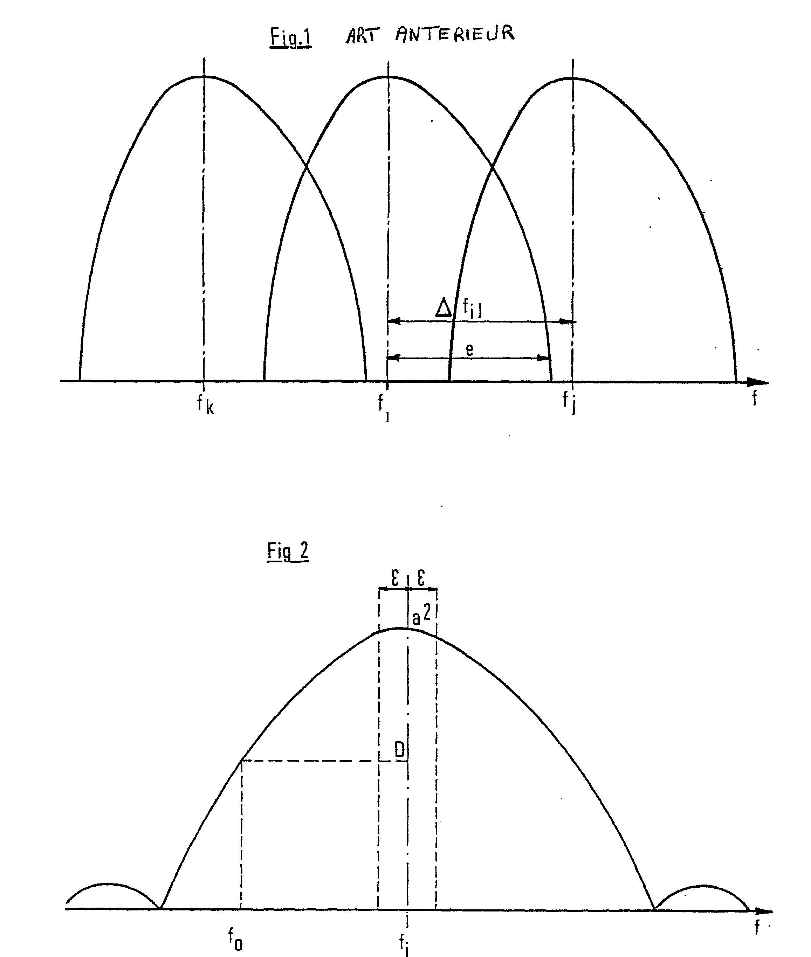

La figure 2 représente les valeurs caractéristiques de la fonction $V(f_i) = A_i^2 + B_i^2$ selon une

échelle logarithmique. La courbe V (f) indique l'évolution de la valeur caractéristique V calculée au point de fréquence $f_i$ lorsque la fréquence f présente dans le signal entrant évolue autour de $f_i$. Le gabarit de cette courbe est lié au choix selon l'invention de la fenêtre temporelle. Lorsque le signal entrant évolue autour de la valeur $f_i$, V ($f_i$) décroît en s'écartant de $f_i$ selon une courbe continue maximale en $f_i$.

Les valeurs V (f) sont proportionnelles au carré de l'amplitude du signal entrant. Considérons un signal contenant $f_i$ au niveau a, la valeur caractéristique V devient:

$$V_i = a^2$$

Considérons un signal contenant $f_o$ au niveau A, la valeur V s'écrit:

$$V_o = e^{-D} A^2$$

La valeur caractéristique s'écrit en effet sous forme exponentielle d'expression générale $e^{-D}$, D étant une grandeur prédéterminée du fait du codage logarithmique des signaux, ainsi qu'il sera explicité ultérieurement.

Donc si $A^2 = a^2 e^D$, $V_o = V_i$ et une fréquence $f_o$ hors intervalle de tolérance ayant un niveau élevé simuler une fréquence recherchée avec un niveau plus faible.

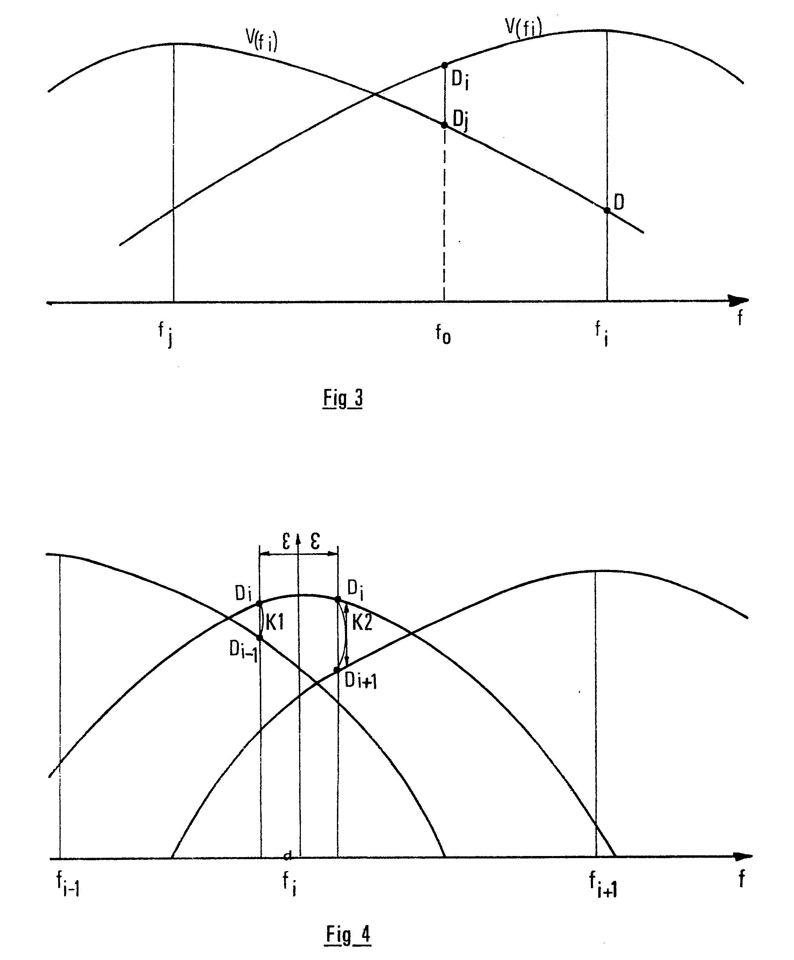

La troncature est définie selon l'invention de manière à pallier cet inconvénient. En effet, en se référant à la figure 3, soient deux courbes V ($f_i$) et V ($f_j$) caractéristiques des fréquences $f_i$ et $f_j$ de référence. Elles présentent des lobes centraux sécants. Soit $f_o$ une fréquence placée entre deux fréquences $f_i$ et $f_j$. Les valeurs caractéristiques obtenues sont:

$$\text{pour } f = f_i \text{ au niveau a} \begin{cases} V\,(f_i) = a^2 \\ V\,(f_j) = a^2\,e^{-D} \end{cases}$$

$$\text{pour } f = f_o \text{ au niveau c} \begin{cases} V\,(f_i) = C^2\,e^{-D_i} \\ V\,(f_j) = a^2\,e^{-D_j} \end{cases}$$

Ceci permet de déterminer sans ambiguité si $f_o$ est une fréquence composante ou doit être rejetée. En effet la mesure de la différence, en échelle logarithmique, V ($f_i$) − V ($f_j$) autorise à rejeter cette fréquence puisque l'écart ($D_i - D_j$) est trop faible. En effet, la fenêtre temporelle selon l'invention est définie de sorte que, pour des fréquences adjacentes, les valeurs V (f) caractéristiques conservent des relations prédéterminées entre elles, lesdites fréquences adjacentes étant prises parmi les fréquences de référence.

Le lobe principal doit donc être suffisamment large pour que la valeur caractéristique de V ($f_j$) soit non nulle en $f_i$ et réciproquement. Toutefois les lobes latéraux doivent rester faibles pour éliminer les fréquences parasites telles que les fréquences hors les fréquences adjacentes.

La figure 4 représente un mode de reconnaissance de fréquence particulièrement intéressant mis en oeuvre selon l'invention. On vérifie, dans l'intervalle $\pm\varepsilon$ autour de la valeur nominale, les relations entre la fréquence $f_i$ et les adjacentes $f_{i-1}$ et $f_{i+1}$, c'est-à-dire si

$$D_i - D_{i-1} \geq k_1 \text{ et } D_i - D_{i+1} \geq k_2$$

dans cet intervalle $f_i \pm \varepsilon$, $k_1$ et $k_2$ étant des constantes choisies de façon appropriée. L'intervalle $\varepsilon$ dépend de la fréquence $f_d$ à détecter pour certains codes et est fixé par le cahier des charges.

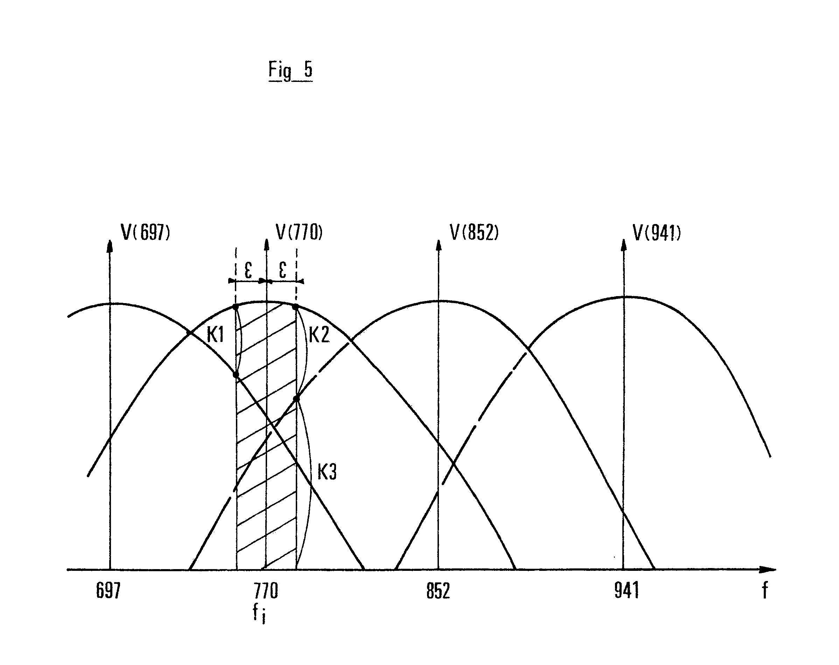

L'exemple de la figure 5 concerne le code clavier utilisé dans la signalisation d'abonné. La bombinaison bifréquence utilisée dans le code est la suivante: une fréquence appartient au groupe »bas« c'est-à-dire 697 Hz, 770 Hz, 852 Hz, 941 Hz tandis que la seconde fréquence appartient au groupe »haut« c'est-à-dire 1209 Hz, 1336 Hz, 1477 Hz, 1633 Hz.

Pour la fréquence $f_i = 770$ Hz, l'intervalle $\pm\varepsilon$ autour de la fréquence nominale est égal à $\pm 17$ Hz. La fréquence $f_i = 770$ Hz est reconnue selon l'invention, si, pour toute fréquence f appartenant à l'intervalle (770 Hz $\pm$ 17 Hz) soit encore (753 Hz − 787 Hz), les valeurs caractéristiques V (f) de cette fréquence vérifient:

$$V\,(f) - V\,(697) \geq K_1\,(770)$$
et
$$V\,(f) - V\,(852) \geq K_2\,(770)$$

Les valeurs $K_1$ (f) et $K_2$ (f) dépendent du codage logarithmique des grandeurs V (f), de la fenêtre temporelle ainsi que de la description fréquentielle de cette fenêtre.

Puis après ce premier test portant sur les fréquences adjacentes, est effectué un second test sur les fréquences $f_{i+2}$ ou encore 941 Hz dans l'exemple présent. On vérifie pour $f = 770 \pm 17$ Hz c'est-à-dire dans l'intervalle (753 Hz, 787 Hz) si l'inéquation V (f) − V (941) $\geq K_3$ (770) est respectée c'est-à-dire si la fréquence 941 Hz est effectivement absente. On choisit également la constante $K_3$ (770) de façon appropriée en fonction de la fenêtre temporelle utilisée et des fréquences composant le code.

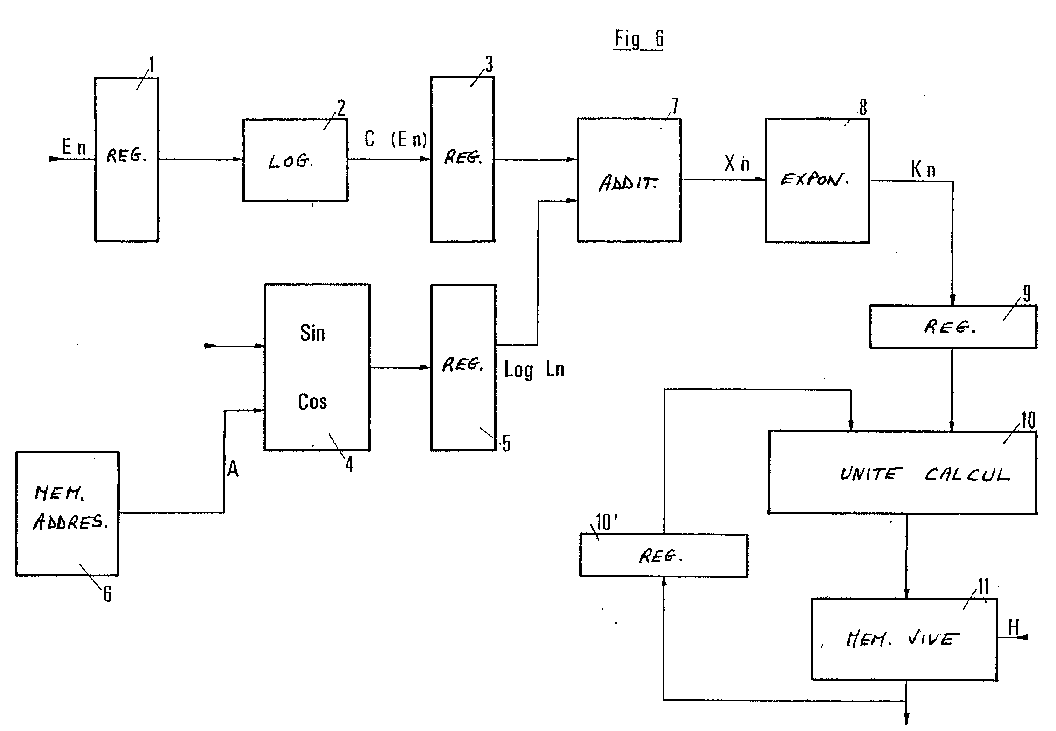

La figure 6 représente une forme de réalisation préférée des moyens de traitement des informations. Le signal numérique entrant formé d'échantillons $E_n$ est mis en mémoire dans un premier registre tampon 1 puis mis sous forme d'un code logarithmique au moyen d'un correcteur 2 qui fournit en sortie l'amplitude du signal codé suivant une loi linéaire $\text{Log } E_n$. Le brevet français 2 229 769 de la demanderesse prévoyait déjà un codage des signaux selon une loi quasi logarithmique pour exprimer l'intercorrélation du signal entrant avec les fréquences étalons. Dans la présente invention, la fenêtre temporelle est codée puis mise en mémoire sous forme logarithmique également. Ces échantillons $c(E_n) = \text{Log } E_n$, issus du correcteur 2 sont appliqués à l'entrée d'un second registre tampon 3. On forme les intégrales d'intercorrélation, entre la séquence $E_n$ entrante et les signaux de référence, calculées sur un nombre fini d'échantillons.

L'échantillon $W_n$ de la troncature temporelle et l'échantillon $R_n$ du signal de référence dépendent du code traité et sont donc des données du système. Le produit $L_n = W_n \cdot R_n$ est mémorisé dans une mémoire tampon 4 codé sous une forme logarithmique selon l'invention. Une mémoire 6 contenant les informations d'affectation des voies adresse cette mémoire tampon 4, c'est-à-dire indique le code de signalisation »présent« sur la voie.

Les fonctions d'intercorrélation s'expriment donc par:

$$K = \sum_r K_n = \sum_n E_n (W_n \cdot R_n) = \sum_n E_n \cdot L_n$$

Le produit $E_n (W_n \cdot R_n)$ s'exprime également en faisant intervenir les fonctions logarithmique et exponentielle.

$$E_n \cdot L_n = \exp (\text{Log } E_n + \text{Log } L_n)$$

$$\text{donc Log } K_n = C (E_n) + \text{Log } L_n$$

Les échantillons Log $L_n$ sont extraits du registre 4 par un balayage des adresses et appliqués à l'entreéd'un registre tampon 5.

Un circuit d'addition 7 additionne, à chaque instant n, les échantillons $C (E_n)$ et Log $L_n$ issus des mémoires 3 et 5 respectivement pour fournir en sortie $X_n = C (E_n) + \text{Log } L_n$.

Une mémoire programmée 8 reçoit cet échantillon $X_n$ et fournit en sortie l'échantillon $K_n$ tel que $K_n = \exp (X_n)$. Le signal $K_n$ sortant est codé selon l'invention sur 11 éléments binares. En effet, le correcteur 2 reçoit les 7 éléments binaires du signal MIC $E_n$ entrant représentant la valeur absolue de l'amplitude. L'approximation logarithmique nécessite 8 éléments binaires (eb). Les échantillons de référence contenus dans le registre 4 sont également codés au moyen de 8 éléments binaires. La capacité mémoire requise pour un système traitant 4 types de codes et intégrant les fonctions sur 128 échantillons est de 8 K mots de 8 éléments binaires. La mémoire tampon 7 qui ne transmet que la valeur absolue des échantillons fournit 7 éléments binaires à l'entrée du circuit d'addition 7.

Le circuit 7 d'addition quant à lui fournit le logarithme du produit du signal entrant et du signal de référence et est codé sur 9 éléments binaires. Comme le produit s'exprime par $P = 2^L$, ceci permet de limiter la mémoire d'exponentiation 8 qui réalise l'opération $\exp = 2^L \times 2^{-8}$ et de coder linéairement l'exponentielle sur 11 éléments binaires. Cette exponentiation est alors réalisée au moyen d'une mémoire programmée de 512 mots de 11 éléments binaires. Les résultats $K_n$ sont appliqués à l'entrée d'un troisième registre tampon 9.

Les fonctions d'intercorrélation

$$\sum_n E_n \cdot L_n$$

pour chacune des fonctions sinus et cosinus sont effectuées au moyen d'une unité de calcul 10 qui applique le résultat codé sur 16 éléments binaires dans une mémoire vive 11 au rythme d'une horloge H. Cette mémoire 11 a une capacité de 512 mots de 16 éléments binaires correspondant aux 16 fonctions d'intercorrélation calculées sur 16 éléments binaires pour les 32 voies traitées en série. Un quatrième registre tampon 10' mémorise les résultats intermédiaires extrait de la mémoire 11 et les réapplique à l'entrée de l'unité de calcul 10.

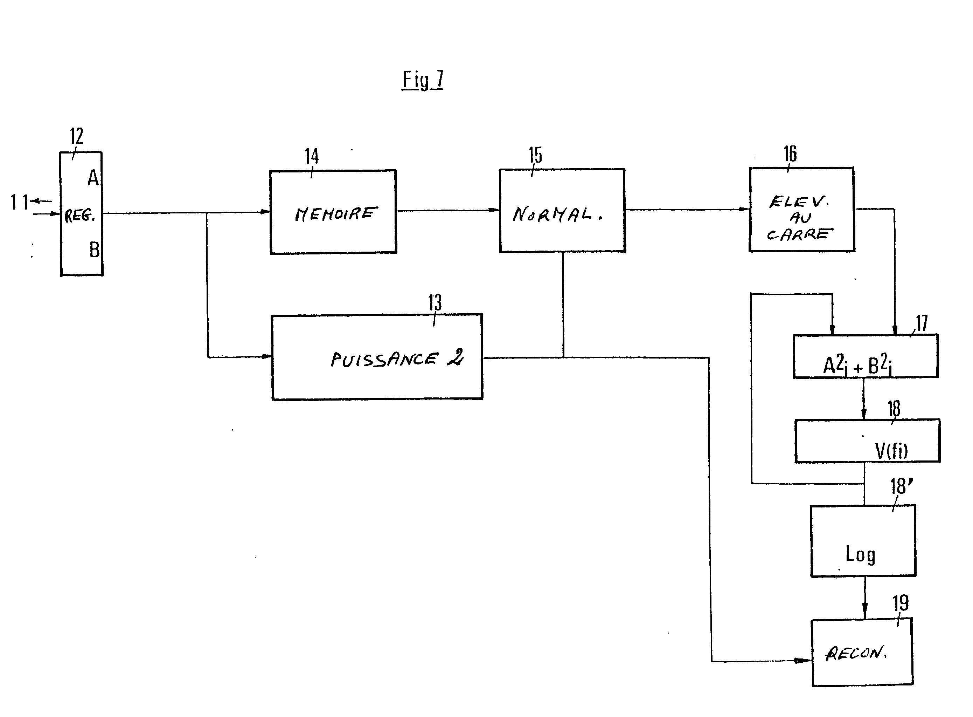

Les valeurs calculées sont extraites de la mémoire vive 11 vers l'unité de traitement représentée figure 7.

Les valeurs V (f) caractéristiques s'expriment comme le carré des fonctions A et B d'intercorrélation associées à une fréquence f. La logique de prétraitement se compose d'un premier registre tampon 12 contenant les valeurs A et B fournies par la mémoire 11 pour chaque voie. Les granduers A et B subissent une opération de normalisation permettant de réduire le nombre d'éléments binaires représentant chacune des fonctions d'intercorrélation.

A cet effet on détermine la plus grande puissance de 2 présente dans l'ensemble des valeurs $A_i$ et $B_i$. Soit $2^N$ cette puissance, N est alors appelé puissance de normalisation. Un dispositif 13 effectue la détermination de la plus grande puissance de 2 à partir des valeurs $A_i$ et $B_i$ issues de la mémoire 12 et fournit ce résultat à l'entrée d'un dispositif 15 de normalisation proprement dit. Ce dispositif 15 reçoit également les valeurs $A_i$ et $B_i$ fournis par la mémoire 12 et fournit en sortie $\alpha_i$ et $\beta_i$ codés sur 8 éléments binaires et déduits de $A_i$ et $B_i$ par les relations

$$\alpha_i = \frac{A_i}{2^{N-7}} \text{ et } \beta_i = \frac{B_i}{2^{N-7}}.$$

On conviendra dans la suite de la description d'appeler $\alpha_i$ et $\beta_i$, et $B_i$ en sous-entendant qu'ils sont normés. Un circuit 16 reçoit ces grandeurs normalisées, issues du dispositif 15, et fournit en sortie leur carré. Une mémoire programmée peut effectuer cette transformation avec une capacité de 256 mots de 8 éléments binaires. Ces carrés sont appliqués à l'entrée d'un circuit d'addition 17, associés deux par pour chaque voie i $(A^2_i + B^2_i)$. De fait, l'opération d'addition s'effectue en deux temps: dans un premier temps une opération $O + A^2_i$ est effectuée puis mise dans un second registre tampon 18 puis, dans un second temps, l'opération $A^2_i + B^2_i$ est effectuée puis mise dans le registre 18 jusqu'à la fin de l'instant de calcul i. Ce registre 18 garde en mémoire une seule valeur caractéristique $V_i$ qui est ensuite appliquée à l'entrée d'un codeur 18 transformant cette grandeur en code logarithmique. Ce codage logarithmique permettra, lors du traitement ultérieur, de comparer entre elles les grandeurs V (f$_i$) caractéristiques par une simple soustraction. Puis les grandeurs caractéristiques V (f$_i$) issues du registre 18' sont appliquées à l'entrée d'un dispositif de reconnaissance proprement dit 19.

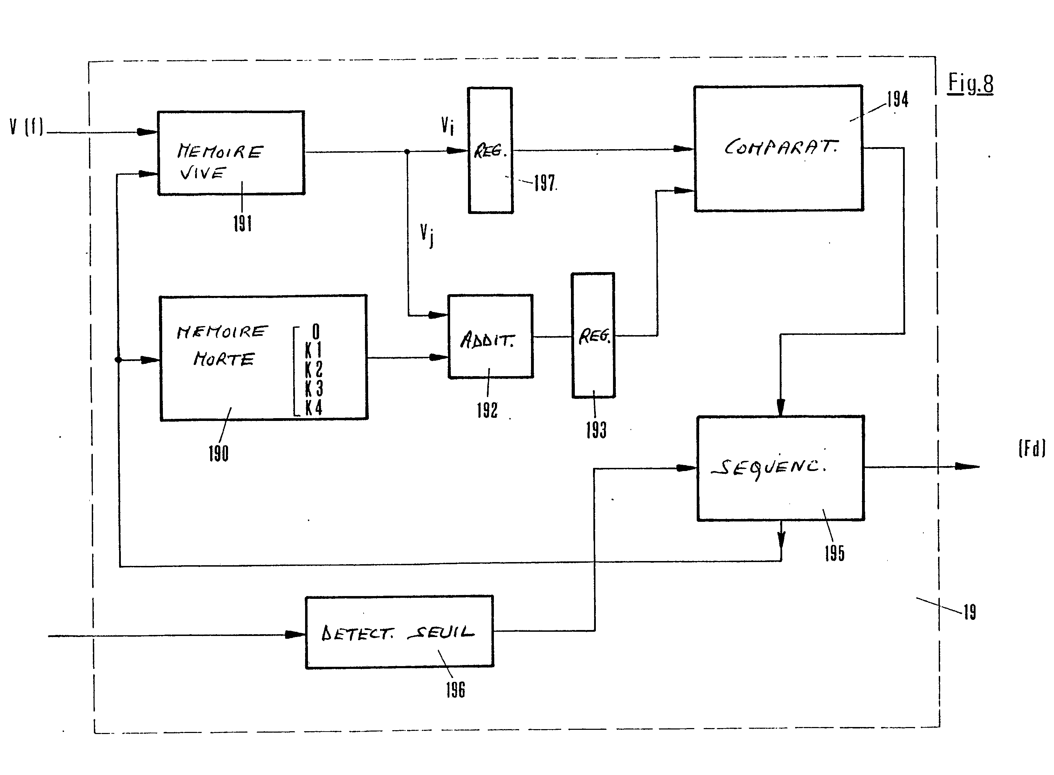

Ce dispositif 19, illustré sur la figure 8, comprend une mémoire vive 191 recevant les grandeurs V (f), une mémoire morte 190 contenant les constantes O, K$_1$ (f), K$_2$ (f), K$_3$ (f), K$_4$ (f) utilisées lors du dédroulement de l'algorithme de décision, une mémoire morte de séquencement 195 pilotant l'ensemble en fonction des résultats obtenus en sortie d'un comparateur 194, cette mémoire 195 fournissant les adresses des mémoires 191 et 190.

Une premmière série de comparaisons effectuées par ce comparateur 194 détermine la plus importante valeur caractéristique parmi toutes celles fournies par la mémoire vive 191. A cet effet, la mémoire vive 191 fournit des grandeurs V (f$_i$) à l'entrée du comparateur 194 par l'intermédiaire d'un premier registre tampon 197. Des valeurs V (f$_i$) également fournies par la mémoire vive 191 sont appliquées à l'entrée d'un circuit d'addition 192 qui reçoit alors la constante 0 de la mémoire 190 pendant cette première phase de comparaison. La circuit d'addition 192 est raccordé au comparateur 194 par l'intermédiaire d'un second registre tampon 193.

Dès que le comparateur 194 a déterminé la plus grande valeur caractéristique V (f$_i$), par exemple, cette valeur est mémorisée dans le registre tampon 197. Les grandeurs V (f$_{i-1}$), V (f$_{i+1}$), V (f$_{i-2}$), V (f$_{i+2}$) extraites du registre tampon 193 sont alors comparées à V (f$_i$). Les écarts sont mesurés et comparés aux constantes K$_1$ (f$_i$), K$_2$ (f$_i$), K$_3$ (f$_i$), K$_4$ (f$_i$) fournies par la mémoire morte 190. Si les écarts sont supérieurs et répondent au critère des reconaissance décrit précédemment, le comparateur 194 fournit un résultat à l'entrée de la mémoire morte de séquencement 195. Cette mémoire 195 indique la validité de la fréquence f$_i$ détectée correspondant à V (f$_i$) maximal. Ce résultat est validé par un détecteur de seuil 196 qui reçoit en entrée la plus grande puissance de 2 fournie par le dispositif 13 utilisée dans la fonction de normalisation. Ce détecteur 196 vérifie ainsi que les niveaux présents V (f$_i$) sont conformes à la dynamique imposée par le cahier des charges et valide le résultat à l'entrée de la mémoire 195 qui fournit dès lors f$_i$, en sortie, fréquence détectée correspondant à V (f$_i$).

Le dispositif de l'invention s'applique à la détection de toute tonalité, aux essais de matériel, etc . . .

**Revendications**

1. Dispositif de reconnâissance de fréquences pour récepteur numérique de signaux multifréquences, ledit récepteur comprenant des moyens de filtrage numérique, des moyens (4) pour mémoriser des échantillons L$_n$ représentatifs de fréquences de référence, des moyens (7) pour additionner en un signal X$_n$ le signal entrant E$_n$ et les échantillons de référence L$_n$, des moyens (10) pour effectuer l'intercorrélation du signal entrant avec lesdits échantillons de référence L$_n$, caractérisé par le fait que lesdis échantillons L$_n$ représentent le logarithme du produit d'une troncature temporelle W$_n$ par un signal de référence R$_n$, correspondant à une fenêtre temporelle dont la fonction, dans le domaine fréquentiel, possède un lobe central présentant une atténuation finie pour les fréquences f$_{i\pm1}$ adjacentes à chaque fréquence f$_i$ à reconnaître et une atténuation infinie pour les fréquences non adjacentes, qu'il comporte des moyens (8) pour obtenir ledit signal X$_n$ sous forme d'exponentielle K$_n$, des moyens (191−193) pour former des valeurs caractéristiques V (f$_i$) pour chaque fréquence f$_i$ et pour former des valeurs V (f$_{i\pm1}$) caractéristique des V pour les fréquences adjacentes à la fréquence f$_i$, et des moyens (194) pour comparer la valeur V (f$_i$) avec les valeurs V (f$_{i+1}$) et V (f$_{i-1}$), et premier résultat de ladite comparaison permettant de déduire si ladite fréquence f$_i$ est effectivement reconnue.

2. Dispositif de reconnaissance de fréquences selon la revendication 1, caractérisé par le fait que lesdits moyens de formation (191−193) fournissent des valeurs V (f$_{i\pm2}$) caractéristiques pour les fréquences non adjacentes à f$_i$ et lesdits moyens de comparaison (194) fournissent un second résultat en comparent ladite valeur V (f$_i$) caractéristique de la fréquence f$_i$ avec les valeurs V (f$_{i\pm2}$) caractéristiques des fréquences non adjacentes F$_{i\pm2}$, ledit second résultat validant ledit premier résultat en déterminant si la fréquence présente est effectivement reconnue.

3. Dispositif selon la revendication 1, caractérisé par le fait que lesdites valeurs V (f$_i$) caractéristiques d'une fréquence se présentent sous forme de logarithmes de grandeurs D$_i$.

4. Dispositif selon l'une des revendications 1 et 2, caractérisé par le fait qu'il comporte des moyens (15) pour normaliser les résultats desdits moyens d'exponentation (8), des moyens (16) pour former le carré des résultats desdits moyens de normalisation (15), et des moyens (17) pour additionner lesdits carrés et en déduire lesdites valeurs caractéristiques V (f$_i$).

**Patentansprüche**

1. Vorrichtung zur Frequenzerkennung für einen numerischen Empfänger von Multifrequenzsignalen, der ein numerisches Filter, einen Speicher (4) zum Speichern von für Referenzfrequenzen repräsentativen Abtastwerte L$_n$, einen Addierer (7), um das Eingangssignal E$_n$ und die Referenzwerte L$_n$ zu einem Signal X$_n$ zu addieren, und ein Glied (10) enthält, das die Interkorrelation des Eingangssignals mit den Referenzwerten L$_n$ bewirkt, dadurch gekennzeichnet, daß die Abtastwerte L$_n$ den Logarithmus des Produktes

einer zeitlichen Unterdrückung $W_n$ mit einem Referenzsignal $R_n$ repräsentieren, das einem Zeitfenster entspricht, dessen Funktion in dem Frequenzbereich einen Zentralbuckel besitzt, der für die Frequenzen $f_{i\pm1}$, die an jede der zu erkennenden Frequenzen $f_i$ angrenzen, eine endliche Dämpfung und eine unendliche Dämpfung für die nicht angrenzenden Frequenzen darstellt, daß sie ein Glied (8) enthält, um das Signal $X_n$ in der Exponentialform $K_n$ zu erhalten, daß Glieder (191—193) vorgesehen sind, um für jede Frequenz $f_i$ die charakteristischen Werte $V(f_i)$ sind für die an die Frequenz $f_i$ angrenzenden Frequenzen die Werte $V(f_{i\pm1})$ zu bilden, die für V charakteristisch sind, und daß ein Komparator (194) vorhanden ist, um den Wert $V(f_1)$ mit den Werten $V(f_{i\pm1})$ und $V(f_{i-1})$ zu vergleichen, wobei ein erstes Resultat dieses Vergleichs es ermöglicht, abzuleiten, ob diese Frequenz $f_i$ effektiv erkannt worden ist.

2. Vorrichtung zur Frequenzerkennung nach Anspruch 1, dadurch gekennzeichnet, daß die Formationsglieder (191—193) Werte $V(f_{i\pm2})$ liefern, die für die nicht an $f_i$ angrenzenden Frequenzen charakteristisch sind, und daß der Komparator (194) ein zweites Resultat liefert, indem er den Wert $V(f_i)$, der für die Frequenz $f_i$ charakteristisch ist, mit den Werten $V(f_{i+2})$ vergleicht, die für die nicht angrenzenden Frequenzen $F_{i\pm2}$ charakteristisch sind, wobei dieses zweite Resultat eine Bestätigung gibt, ob die gegenwärtige Frequenz effektiv erkannt worden ist.

3. Vorrichtung nach Anspruch 1, dadurch gekennzeichnet, daß die für eine Frequenz charakteristischen Werte $V(f_i)$ sich in Form von Logarithmen der Größen $D_i$ darstellen.

4. Vorrichtung nach einem der Ansprüche 1 und 2, dadurch gekennzeichnet, daß ein Normalisierglied (15) zum Normalisieren der Resultate des Exponentialbildners (8), ein Quadrierglied (16), um das Quadrat der Ergebnisse des Normalisiergliedes (15) zu bilden, und einen Addierer (17) aufweist, um diese Quadratwerte zu addieren und daraus die charakteristischen Werte $V(f_i)$ abzuleiten.

## Claims

1. Frequency recognition device for digital receiver of multi-frequency signals, said receiver comprising digital filtering means, means (4) for memorising samples $L_n$ indicative of reference frequencies, means (7), or adding the incoming signal $E_n$ ans reference samples $L_n$ and forming a signal $X_n$, means (10) for effecting the intercorrelation of the incoming signal with said reference samples $L_n$, characterized in that said samples $L_n$ represent the logarithm of the product of the time truncation $W_n$ by a reference signal $R_n$, corresponding to a time window of which the function, in the frequency domain, has a central lobe having a definite attenuation for the frequencies $f_{i\pm1}$ adjacent each frequency $f_i$ to recognize and an infinite attenuation for the non adjacent frequencies, that it comprises means (8) for obtaining said signal $X_n$ in the form of an exponential $K_n$, means (191—193) for forming characteristic values $V(f_i)$ for each frequency $f_i$ and for forming values $V(f_{i\pm1})$ characteristic of V for the frequencies adjacent the frequency $f_i$, and means (194) for comparing the value $V(f_i)$ with the calues $V(f_{i+1})$ and $V(f_{i-1})$, a first result of said comparison making it possible to deduce whether said frequency $f_i$ is effectively recognized.

2. Frequency recognition device according to Claim 1, characterized in that said forming means (191—193) furnish characteristic values $V(f_{i+2})$ for the frequencies not adjacent to $f_i$ and said comparing means (194) furnish a second result by comparing said value $V(f_i)$ characteristic für the frequency $f_i$ with the values $V(f_{i\pm2})$ of characteristic the non-adjacent frequencies $f_{i\pm2}$, said second result validating said first result by determining whether the present frequency is effectively recognized.

3. Device according to Claim 1, characterized in that said values $V(f_i)$ characteristic of a frequency are presented as logarithms of magnitudes $D_i$.

4. Device according to one of Claims 1 and 2, characterized in that it comprises means (15) for standardising the results of said exponentiation means (8), means (16) for forming the square of the results of said standardisation means (15), and means (17) for adding said squares and for deducing therefrom said characteristic values $V(f_i)$.

Fig.1   ART ANTERIEUR

Fig 2

9

Fig_3

Fig_4

Fig_5

Fig 6

Fig 7

Fig.8

0 073 719